# EUROPEAN PATENT SPECIFICATION

(11) **EP 4 173 857 B1**
(45) Date of publication and mention of the grant of the patent: **09.07.2025**
(21) Application number: 22204345.7
(22) Date of filing: 28.10.2022
(51) Int. Cl.: B60G 3/20

(54) **REAR SUSPENSION SYSTEM**
HINTERRADAUFHÄNGUNGSSYSTEM
SYSTÈME DE SUSPENSION ARRIÈRE

(30) Priority: 01.11.2021 EP 21205807
(43) Date of publication of application: 03.05.2023
(73) Proprietor: Wuhan Lotus Cars Co., Ltd., Wuhan, Hubei (CN)
(72) Inventor: Cimatti, Franco, 41026 Pavullo nel Frignano (IT)
(74) Representative: Studio Torta S.p.A.

(56) References cited:
- WO-A1-2012/082025
- CN-A- 110 884 312
- US-B1- 7 891 684

## Description

The present invention relates to a rear suspension system for a rear wheel of a vehicle, in particular an automotive vehicle, and to a vehicle having such a rear suspension system.

### Background of the invention

In the motor vehicle industry the process towards fully electric or hybrid vehicles is in full progress. Particular attention is being paid to the distance that can be reached with the electric drive without stopping to recharge. However, the distance that can be reliably reached is still less than that with a conventional vehicle with an internal combustion engine. In addition, it remains a constant endeavor to improve the driving characteristics of the vehicle in general.

WO 2012/082025 A1 relates to a wheel suspension for a rear wheel and a motor vehicle. The wheel suspension comprises several control links which extend between a frame structure of the motor vehicle and a housing of the wheel spindle.

It is an object of the present invention to provide means which allow to overcome the problems known from the state of the art and, in particular, to provide means which contribute a vehicle configuration that conduces an increase of the distance that can be reached with the electric drive before recharging is necessary while at the same time also improving the driving characteristics.

The object is achieved by the subject matter of the independent claim. Preferred embodiments and preferred features are specified in the dependent claims and the following description.

### Summary of the invention

The object is solved according to a first aspect of the invention in that a rear suspension system for a rear wheel of a vehicle is proposed, in particular an automotive vehicle, wherein the suspension system comprises a plurality of lower links and wherein a chassis-side hard point of at least one rear lower link, in particular a rear lower leading link, among the plurality of lower links is located rearwards from a center axis of the rear wheel by a greater distance than a distance between a chassis-side hard point of any other lower link, in particular including at least one front lower link, among the plurality of lower links and the center axis of the rear wheel.

It is, thus, the surprising finding that providing a rear lower link having such characteristics, in particular a rear lower leading link, for the rear suspension system which is attributed to a rear wheel of the vehicle allows to free additional space within the wheelbase of the vehicle without loss of safety and comfort. In this respect it has been particularly found that additional space can be freed within the wheelbase in the proximity of the rear axis. This is, because due to the presence of the thus defined, in particular leading, lower link it is possible to omit the conventional trailing link.

A respective design of the arrangement of the rear suspension system's components, thus, allows that in fully or partly electric-driven vehicles a larger battery can be accommodated in the vehicle and/or the size, such as the length, of the vehicle can be reduce, hence, its weight.

The increased battery size allows more energy for the same vehicle dimensions, hence, an increased driving range. It is also possible to keep the same battery size but to redistribute the vehicle's geometry to shorten the vehicle, with a lower cabin and vehicle height and/or shorter vehicle length and lower weight, with additional range opportunity from lower weight. It is also possible to decrease the battery height, while keeping the battery energy constant, with a lower cabin and vehicle height. This may lead to better vehicle dynamics, with additional range opportunity from lower aero drag.

These aspects alone or in combination allow to increase the distance which can be traveled by the vehicle until the battery needs to be recharged.

Especially it turned out that the proposed rear suspension system is capable of being conceived for the simultaneous achievement of multiple aims which is more than normally in the scope of suspension concepts. The proposed design can, hence, be regarded as a framework which allow easy implementation for further features.

The proposed design of the rear suspension system is, thus, a further step towards an optimal use of space, for the benefit of overall vehicle architecture efficiency, in terms of maximizing usable space which can be used for battery volume and cabin space within the wheelbase. In addition, this may also lead to improved center of gravity placement opportunities, and to lower weight of the vehicle.

It is understood that the technical advantages, such as improved space efficiency and weight reduction, are beneficial for both electric vehicles and conventional combustion engine vehicles.

In an embodiment, the suspension system can be or be formed as or comprise a five-link suspension system. The suspension system can comprise a transverse lower link, a rear upper link, a front upper arm or links, and/or a track rod.

In other words, preferably, the rear suspension system comprises the leading lower link, the transverse lower link, the rear upper link, the front upper arm or links, and the track rod so as to form a particular preferred five-link suspension system.

Preferably, the term "link" or "links", especially "upper link" or "upper links", refers to when in the upper part of the suspension, two separate elements connect the knuckle (hub carrier) to the chassis.

Preferably, the term "arm", especially "upper arm", refers to when a single element connects the knuckle to the chassis. In this case, because of stability, the arm has one connection to the knuckle, and two connections to the chassis.

Alternatively or in addition, in an embodiment the chassis-side hard point/s of the leading lower link, of the rear upper link and/or of the transverse lower link can be arranged, respectively, at or behind the wheel center with respect to a specific direction, especially when the suspension system is installed on the vehicle,
wherein the specific direction points from the front to the rear of the vehicle parallel to the vehicle's center axis, especially for the suspension system being installed on the vehicle.

By convention, the term "trailing link" denotes a link whose joint to the wheel knuckle (corresponding to a kinematic coupling point of the respective link) is behind the joint on the chassis side with respect to a direction of travel of the vehicle. Correspondingly, the term "leading link" denotes a link whose joint to the knuckle is in front of the joint on the chassis side with respect to the direction of travel of the vehicle. The term "transversal link" denotes a link which extends substantially transversally between its chassis-sided and knuckle-sided joints with respect to the direction of travel of the vehicle. In terms of their function(s), trailing links, leading links and transversal links in a wheel suspension system serve for managing, to different extents, a longitudinal and/or a transversal compliance in the suspension in the case of impacts through the wheel.

Said links (or at least sections thereof) are typically elements of the suspension system which are located or running closer to the ground and/or at the level of the battery, which in electric vehicles is accommodated low and within the wheelbase. Hence, designing the suspension system in the proposed manner so as to provide the hard points outside the wheelbase, allows to free additional space for accommodating parts of the battery. At the same time overall driving efficiency and stability can be maintained or even improved.

In other words, the proposed design options allow to use space mostly behind the wheel center rather than in front of the same, respectively, with respect to the specific direction.

Preferably, the center of gravity of the chassis-side hard points are evaluated since the structure is typically extended in space.

If in this application reference is made to an element being "behind the wheel center" or being "in front of the wheel center", it is preferably to be understood that this reference is made with respect to the specific direction, unless otherwise stated or evident from the context. "Behind the wheel center" of a rear wheel preferably refers to a side of the wheel facing towards the rear of the vehicle. Respectively, "in front of the wheel center" of a rear wheel preferably refers to a side of the wheel facing towards the front of the vehicle.

Alternatively or in addition, in an embodiment the chassis-side hard points of the front upper arm or links and/or of the track rod can be arranged, respectively, before the wheel center with respect to the specific direction. These elements, being located typically higher than the battery, do not prevent extending the battery towards the rear of the vehicle.

This improves the stability of the suspension system without demanding an excessive amount of space. This is because the hard points of the track rod and the front upper arm or links are typically close to the rear axis. Hence, in one embodiment, the hard points have a maximal distance from the rear axis of the vehicle, when the suspension system is installed on that vehicle, of 200 mm or less, preferably of 150 mm or less, and/or of 10 mm or more, preferably of 50 mm or more.

Preferably, the center of gravity of the chassis-side hard points are evaluated since the structure is typically extended in space.

Alternatively or in addition, in an embodiment the leading lower link, the transverse lower link, the rear upper link, the front upper arm or links and/or the track rod can be arranged, especially respectively with one of its ends, at a system's knuckle. For example, the respective other end of each of said elements might be connected to the chassis side. This supports the wheel bearing.

Alternatively or in addition, in an embodiment the rear upper link and the front upper arm or links extend such in space that they can cross each other within a projective view of the suspension system on the ground when installed on the vehicle. The crossing allows to achieve a virtual instantaneous center that forms the suspension's kingpin axis in a position different from where the upper links' knuckle-side hard points are located.

A respective design turned out to improve stability of the suspension system while at the same time improving also driving comfort.

Alternatively or in addition, in an embodiment the center lines, especially the virtual extension of the center lines, of two or more of: the leading lower link, the front upper arm or links and the transverse lower link can cross at a single position, which preferably is located behind the wheel center with respect to the specific direction.

A respective design turned out to improve stability of the suspension system while at the same time improving also driving comfort.

Preferably, the center line of each link may be defined, especially in a projective view of the suspension system on the ground when installed on the vehicle, as a line extending from the center of a kinematic coupling point to the center of a bushing and/or chassis-side hard point, respectively, of the respective link. The kinematic coupling point and the bushing and/or chassis-side hard point are preferably provided at opposite ends of the respective link.

The center of a kinematic coupling point, a bushing and/or a chassis-side hard point may be the center of gravity of that element.

Alternatively or in addition, in an embodiment each of one or more of the links can have a bushing at one of its ends for coupling the link to a chassis of the vehicle, wherein preferably the bushing provides the respective chassis-side hard points.

Alternatively or in addition, in an embodiment the suspension system can be designed, especially the leading lower link and the transverse lower link can be arranged, such that for the suspension system a separation of longitudinal compliance for comfort and side stiffness for roadholding and/or handling is obtained.

It is, thus, possible in an easy and economic manner to obtain said separation solely by appropriate design of the two links.

It surprisingly turned out that this effect may be obtained by said two lower links which are located entirely or mostly behind the wheel center. The upper links may act as a pivot point, and the track rod may keep the wheel alignment.

For example, the suspension system can be designed such, that independent characteristics of longitudinal compliance for comfort, and side stiffness for roadholding and handling is obtained.

For example, the suspension system can be designed such, that longitudinal impact comfort is achieved with suspension alone.

Alternatively or in addition, in an embodiment the transverse lower link can comprise a stiff and pivoting bushing, especially for setting a roadholding response and/or a side stiffness.

It turned out that a respective chosen bushing allows controlling of the vehicle dynamic in a precise and efficient manner. All the more, a respective design option is cheap in implementation.

The inboard bushing on the transverse lower link may act as a pivot. The radial stiffness of this bushing may be high. However, it may allow rotation in a similar manner to a spherical joint. A bushing with rubber is preferred to a spherical joint. This is because it provides road noise isolation. More commonly, spherical joints are preferred at the knuckle side, preferring the noise isolation of the full suspension at the chassis side.

Preferably, a bushing is regarded as being "stiff", if the radial stiffness is between 1000 and 50000 N/mm.

Preferably, a bushing is regarded as being "pivoting", if the conical stiffness is below 5000 Nm/degree.

Alternatively or in addition, in an embodiment the leading lower link can comprise a large and/or soft bushing, especially aimed at setting a longitudinal impact comfort, especially thanks to a longitudinal compliance up to 20 mm at the wheel.

The softer the, especially "large", bushing at the chassis-side of the leading lower link, the lower the longitudinal stiff-ness at the wheel. This longitudinal compliance acts as a "cushion" to spread the impact over a longer time, thus lowering the force peak fed to the chassis.

Preferably, a bushing is regarded as being "soft", if the radial stiffness is between 100 and 1000 N/mm.

It turned out that a respective chosen bushing allows controlling of the vehicle dynamic in a precise and efficient manner. All the more, a respective design option is cheap in implementation, based on conventional technology for these components in the automotive industry.

The proposed features allow a longitudinal impact comfort with suspension alone, and still provide for noise isolation between the full suspension and the chassis, to enable hard-mounted rear subframe or mounting the suspension directly to the body structure. Hence, it is preferred that, in case a subframe is used, it can be hard-mounted to a vehicle chassis, with a better structural integration of the rear subframe, that also performs as a stiffening and reinforcing element of the body structure, and this can allow weight reduction.

For example, soft mounting of the subframe is usually achieved with 4 large rubber bushings, so the subframe is fixed in 4 positions to the body (2 left and 2 right, symmetric to the vehicle's longitudinal centerline, 2 in front of the wheel, and two behind the wheel). A rigidly (hard) mounted subframe can be fixed to the body with more than 4 points: no large bushings are necessary (space and weight saving), no relative motion of subframe to body (further space saving), and with more than 4 fixing points, the subframe reinforces the body structure where it is most desirable.

Preferably, a bushing is regarded as being "large", if it has a diameter of 60 mm or more, preferably of 100 mm or more (especially on subfrmaes).

Preferably, a bushing is regarded as being "soft", if it has below 6000 N/mm radial stiffness (for example, 6000 is stiff, bus still not hard mounting).

For example, a large bushing for suspension links may be of a diameter of more than 60 mm. On subframes, more than 100 mm. A soft subframe bushing is preferably below 6000 N/mm radial stiffness (6000 is stiff, bus still not hard mounting).

Alternatively or in addition, in an embodiment the suspension system can comprise a spring, which preferably (a) is located and/or extends behind the wheel center with respect to the specific direction and/or (b) has a center axis, wherein at least that section of the spring's center axis which extends within the spring has a minimal distance from a vertical extending diameter-line of the wheel mid plane, especially (i) of less than 200 mm, preferably of less than 150 mm, preferably of less than 100 mm, preferably of less than 50 mm, (ii) of more than 10 mm, preferably of more than 50 mm, preferably of more than 100 mm, preferably of more than 150 mm, preferably of more than 200 mm, and/or (iii) so as to create a motion ratio of the spring deflection compared to wheel vertical motion of more than 0.6, and ideally more than 0.70.

This is especially the case for the suspension system installed on the vehicle.

A design implementing a respective minimal distance allows for an increased spring motion ratio. This may lead to lower road force NVH (Noise, Vibration, Harshness) inputs to the vehicle's body structure and is, therefore, preferred.

Alternatively or in addition, in an embodiment the suspension system can comprise a damper, which preferably (a) is located and/or extends in front of the wheel center with respect to the specific direction and/or (b) is mounted with its bottom on the knuckle. Locating the damper on the knuckle promotes a high motion ration also for the damper (for example higher than 0.75, ideally between 0.85 and 0.95, such as 0.90); this also allows to achieve the desired damping effect with lower damping forces, also reducing the NVH inputs from the camper to the body structure. The simultaneous increase of both spring and damper motion ratios is a clear NVH advantage for the vehicle, ideally with more than 0.70 for the spring and at the same time more than 0.90 for the damper.

The damper in front of wheel center can create space to locate a spring, such as the spring mentioned above, closer to the rear wheel (especially with the spring located behind the wheel center) for higher spring motion ratio, so with lower spring or air spring forces.

These design options in addition can allow for a particular efficient suspension system so that only little space is required within the wheelbase, especially if both, the damper and the spring are incorporated.

It has been particularly found that in case of the spring being behind the wheel center and the damper being in front of wheel center, the phase delay of amplitude and frequency modulation is promoted. Furthermore, use of gyroscopic effect in favor of wheel travel with less tire patch force variation is obtained. This allows for a longer tire life, a better efficiency and less tire bounce.

Hence, the proposed features promote isolation from powertrain disturbance, and exploitation of gyroscopic effects, for the purpose of optimizing tire-road interactions and rolling efficiency.

Alternatively or in addition, in an embodiment the track rod can be located and/or extends in front of the wheel center with respect to the specific direction.

A respective designed track rod allows for an independent rear steer even with a large air spring.

Thus, the proposed features allow to incorporate the possibility of independent rear wheel steering, to enable active toe control, for more rolling efficiency and more vehicle dynamics options.

Alternatively or in addition, in an embodiment a kinematic point of the leading lower link and/or a kinematic point of the transverse lower link can be located behind the wheel center with respect to the specific direction.

Since said links are typically lower links, i.e. links which are arranged and extending close to the ground when the system is installed on the vehicle, it is preferred to provide them outside of the wheelbase. Hence, preferably each of the transverse lower link and/or the leading lower link is arranged and extends behind the wheel center with respect to the specific direction.

Alternatively or in addition, in an embodiment a kinematic point of the rear upper link and/or a kinematic point of the front upper arm or links can be located in front of the wheel center with respect to the specific direction.

Alternatively or in addition, in an embodiment a kinematic point of the track rod can be arranged at a side front of the knuckle.

This further improves the independent rear steer option even with a large air spring.

The object is solved according to a second aspect of the invention in that a vehicle, especially an electric vehicle or a hybrid vehicle, more precisely an electric automotive vehicle or a hybrid automotive vehicle, having at least one suspension system according to the first aspect of the invention is proposed.

Alternatively or in addition, in an embodiment the vehicle can comprise at least one space for receiving a battery capable of energizing at least one motor of the vehicle, wherein preferably the space is located within the wheelbase of the vehicle.

Alternatively or in addition, in an embodiment the vehicle can comprise a rear subframe which is hard-mounted (for example directly bolted without using rubber interface elements like bushings) to a vehicle chassis.

According to a third aspect, a rear suspension system for a rear wheel of a vehicle is proposed, in particular an automotive vehicle, wherein the suspension system for the rear wheel is a leading link suspension system.

The leading link suspension system can be defined as a suspension system comprising one or more lower links, wherein among all lower links of the suspension system a link having a largest distance between a chassis-side hard point and a knuckle-side kinematic point of the respective link in a direction parallel to a specific direction of the vehicle is a leading link.

In addition, the leading link suspension system can be defined as a suspension system comprising one or more lower links, wherein further among all lower links of the suspension system at least one leading link of the suspension system is configured to manage longitudinal compliance in the suspension. In particular, the at least one leading link can be arranged to accommodate a greater portion of an impact in a direction parallel to a longitudinal direction of the vehicle than any trailing lower link possibly comprised by the suspension system.

According to a fourth aspect, a rear suspension system for a rear wheel of a vehicle is proposed, in particular an automotive vehicle, wherein the suspension system comprises a leading lower link.

Embodiments of a rear suspension system according to the third or fourth aspect include combinations with any of the features as set forth above in connection with a rear suspension system according to the first aspect.

### Brief description of the drawings

For a better understanding of embodiments of the invention and to show how the same may be carried into effect, reference will now be made, purely by way of example, to the accompanying drawings in which like numerals designate corresponding elements or sections throughout.

In the accompanying drawings:
- Fig. 1: shows a three-quarter front inboard view on a rear suspension system according to the first aspect of the invention;
- Fig. 2: shows a three-quarter rear inboard view on the system;
- Fig. 3: shows a top view on the system;
- Fig. 4: shows a bottom view on the system;
- Fig. 5: shows a rear view on the system;
- Fig. 6: shows a vehicle according to the second aspect of the invention; and
- Fig. 7: shows the vehicle with an increased battery.

### Detailed description of the drawings

Various examples of embodiments of the present invention will be explained in more detail by virtue of the following embodiments illustrated in the figures and/or described below.

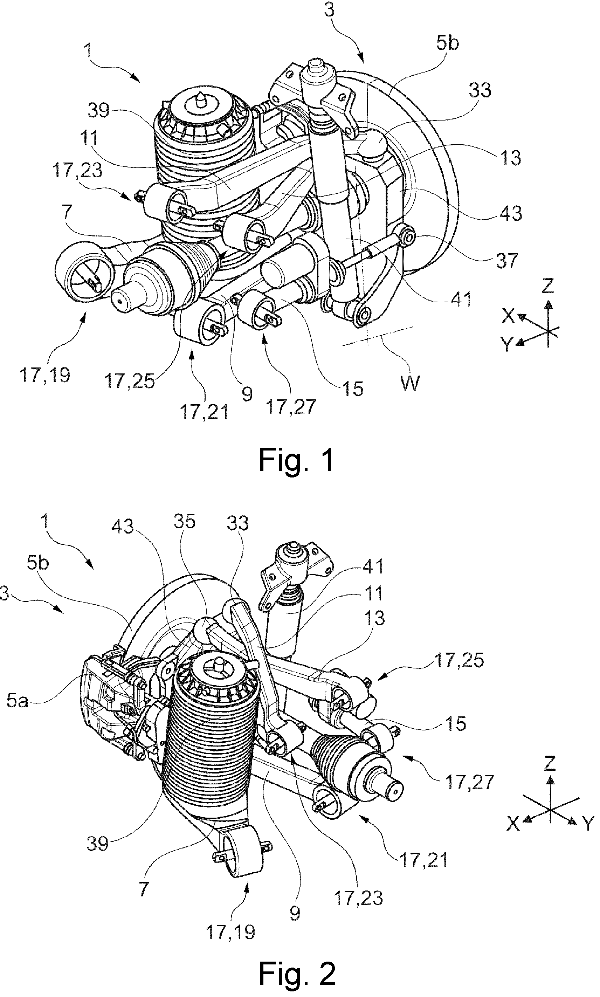

Fig. 1 shows a three-quarter front inboard view on a rear suspension system 1 according to the first aspect of the invention. Fig. 2 shows a three-quarter rear inboard view on the system 1.

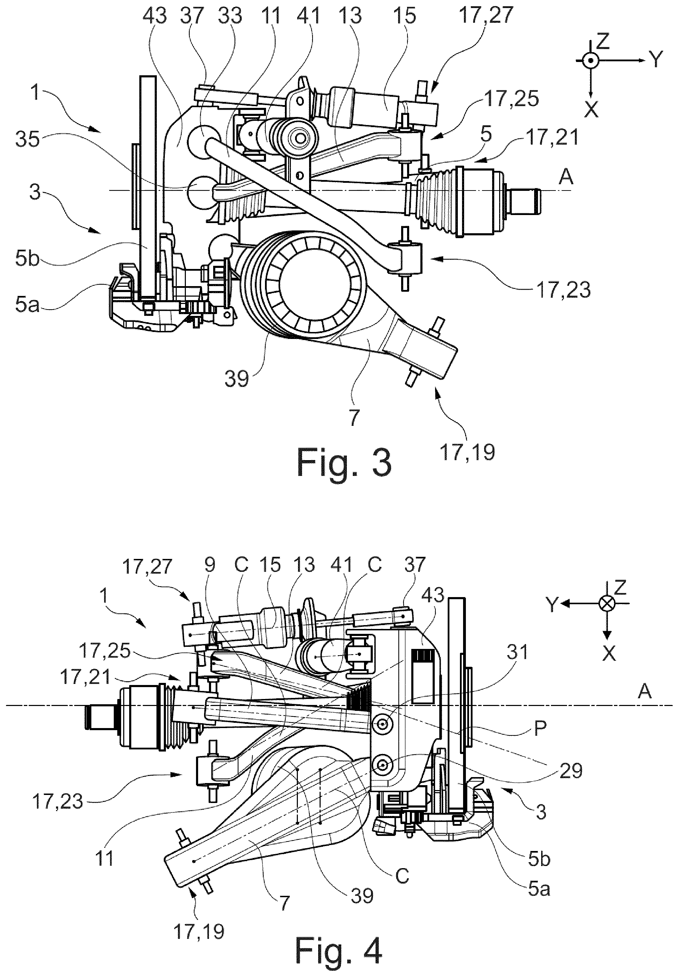

Figs. 3-5, respectively, show a top view, a bottom view and a rear view of the system 1. The same features are labeled with same numerals throughout the Figures.

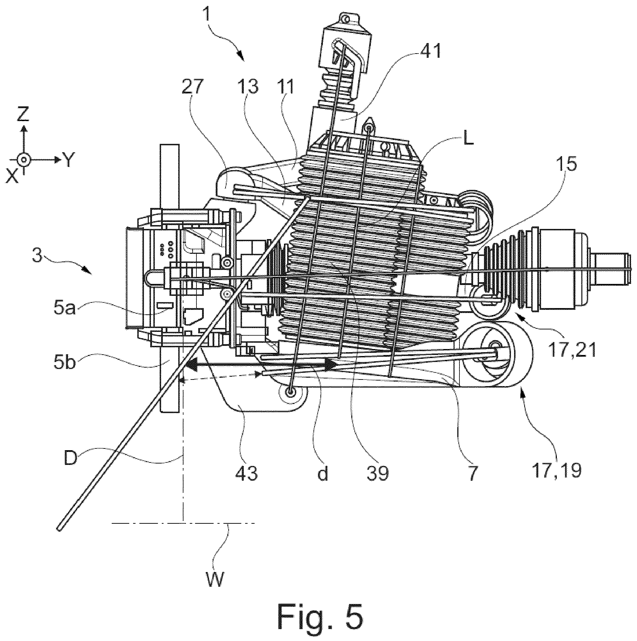

The system 1 can be used with a rear wheel of a vehicle, a contact line with the ground W of which wheel is partly indicated in Figs. 1 and 5 for illustration purposes only. Actually, the shown system 1 is designed for a left-handed side rear wheel of the vehicle. Furthermore, also a disc brake 3 with a caliper 5a and a brake disc 5b are shown for illustration purposes only.

The system 1 has a leading lower link 7, a transverse lower link 9, a rear upper link 11, a front upper arm 13 and a track rod 15. Hence, the system 1 is a five-link suspension system. Each of the links 7, 9, 11 and 13 and the track rod 15 has a bushing 17 at one of its ends for coupling the respective link or track rod to a chassis of the vehicle.

The bushing 17 of the transverse lower link 9 is a stiff and pivoting bushing. The bushing 17 of the leading lower link 7 is a large and/or soft bushing.

The leading lower link 7 has a chassis-side hard point 19, the transverse lower link 9 has a chassis-side hard point 21, the rear upper link 11 has a chassis-side hard point 23. Likewise has the front upper arm 13 a chassis-side hard point 25 and the track rod 15 a chassis-side hard point 27. The chassis-side hard points are provided by the respective bushings 17.

In Figs. 3 and 4 a horizontal line A parallel to a direction Y indicates the rear wheel's center axis in form of a projection on top of the drawing plane for the system 1 being installed on the vehicle (that axis here indicates at the same time also the axis of the brake disc 5b). It is clear, that the center axis of the wheel actually is offset a certain distance into the drawing planes of Figs. 3 and 4. However, the line A is intended just for illustrating purposes of the course of the wheel's center axis.

It is apparent from these Figures, that the chassis-side hard points of the leading lower link 7, of the rear upper link 11 and of the transverse lower link 9 are, respectively, at or behind the wheel center with respect to a direction X. The direction X points from the front to the rear of the vehicle parallel to the vehicle's center axis and may be regarded as a specific direction to which can be referred to. The directions Y and Z are perpendicular to each other and to the X direction. The Z direction points from bottom to top and the Y direction from left to right, for the system being installed on the vehicle.

In other words, along the direction X, the (center of gravities of the) chassis-side hard points of the leading lower link 7, of the rear upper link 11 and of the transverse lower link 9 are passed, respectively, not before the wheel center is passed or reached.

It is likewise apparent from these Figures that the (center of gravities of the) chassis-side hard points of the front upper arm 13 and/or of the track rod 15 are, respectively, before the wheel center with respect to the specific direction (direction X). Furthermore, the track rod 15 is located and extends in front of the wheel center with respect to the specific direction (direction X).

As can be best seen from Fig. 4, a kinematic point 29 of the leading lower link 7 and a kinematic point 31 of the transverse lower link 9 are located behind the wheel center with respect to the specific direction (X direction). Contrary, a kinematic point 33 of the rear upper link 11 and a kinematic point 35 of the front upper arm 13 are located in front of the wheel center with respect to the specific direction (X direction). A kinematic point 37 of the track rod is arranged at a side front of the knuckle.

As can be best seen from Fig. 3, the rear link 11 and the front link 13 extends such in space that they do cross each other within a projective view of the suspension system on the ground when installed on the vehicle.

As can be best seen from Fig. 4, the center lines C, respectively, of the leading lower link 7, the transverse lower link 9 and the front upper arm 13 do cross at a single position P, which is located behind the wheel center with respect to the specific direction (X direction).

The center line C of each link 7, 9, 13 is defined, in a projective view of the suspension system on the ground when installed on the vehicle, as a line extending from the center of gravity of the kinematic coupling point 29, 31, 35 to the center of gravity the bushing 17, respectively, of the respective link 7, 9, 13.

The system 1 further comprises a spring 39 which is located and extends behind the wheel center with respect to the specific direction (X direction). The spring 39 also has a center axis L. The section of the spring's center axis which extends within the spring 39 has a minimal distance d from a vertical extending diameter-line D of the wheel mid plane so as to create a motion ratio of the spring deflection compared to wheel vertical motion of more than 0.6, and ideally more than 0.70.

The system 1 further comprises a damper 41 which is located and extends in front of the wheel center with respect to the specific direction (X direction) and which is mounted with its bottom on a knuckle 43 of the system 1. Also the links 7, 9, 11, 13 and the track rod 15 are arranged at the system's knuckle 43.

In the system 1, as described above in connection with Figs. 1 to 5, a chassis-side hard point 19 of at least one rear lower link 7, in particular a rear lower leading link, among the plurality of lower links 7, 9 is located rearwards (according to a direction of travel of the vehicle) from the center axis A of the wheel by a greater distance than a distance between a chassis-side hard point 21 of any other lower link, in particular including at least one front (transverse) lower link 9, among the plurality of lower links 7, 9 and the center axis A of the rear wheel.

Furthermore, the rear suspension system 1, as described above in connection with Figs. 1 to 5, constitutes what can be regarded as a leading link suspension system. Specifically, among the lower links 7, 9 of system 1 a link having a greatest distance between a chassis-side hard point 19 and a knuckle-side kinematic point 29 of the respective link 7 in the specific direction (X direction) is a leading link.

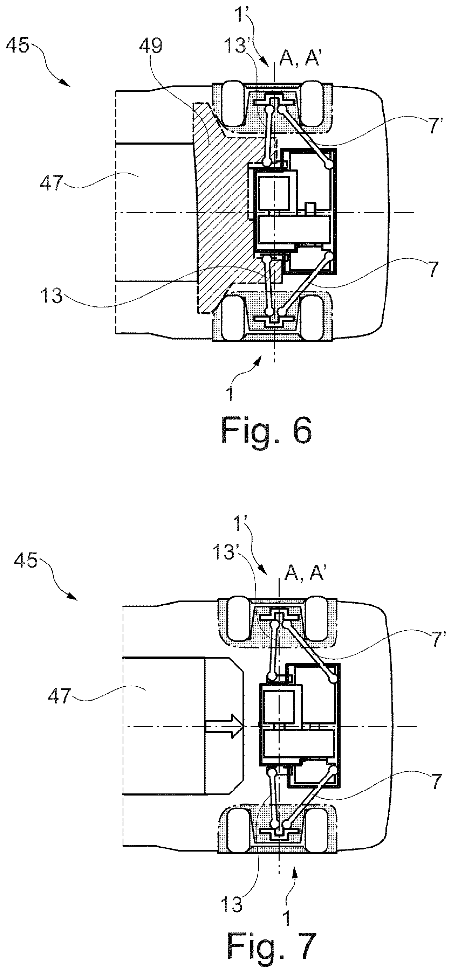

Fig. 6 shows a rear part of a vehicle 45 according to the second aspect of the invention. The vehicle 45 has a rear suspension system 1 for the left-handed rear wheel and a rear suspension system 1' for the right-handed rear wheel. The system 1 the system as described above with respect to Figs. 1-5.

The system 1' might be similar to system 1, however, mirrored about the vertically extending longitudinal center plane of the vehicle 45 (i.e. a plane which is extending perpendicular to the drawing plane of Fig. 6 and crosses the illustrated center line of the vehicle). Each suspension system 1, 1' is represented by its leading lower link 7, '7 and its front upper arm 13, 13'.

The vehicle 45 also has a battery 47. Since the proposed rear suspension systems 1, 1' are used, additional space is freed, as indicated by a hatched area 49.

In Fig. 7 the use of a larger battery 43 is illustrated by respective arrows.

### List of reference signs

- 1, 1': Rear Suspension System
- 3: Brake system
- 5a: caliper
- 5b: Brake disc
- 7, 7': Leading lower link
- 9: Transverse lower link
- 11: Rear upper link
- 13, 13': Front upper arm
- 15: Track rod
- 17: Bushing
- 19: Hard point
- 21: Hard point
- 23: Hard point
- 25: Hard point
- 27: Hard point
- 29: Kinematic point
- 31: Kinematic point
- 33: Kinematic point
- 35: Kinematic point
- 37: Kinematic point
- 39: Spring
- 41: Damper
- 43: Knuckle
- 45: Vehicle
- 47: Battery
- 49: Area
- A, A': Wheel's center axis
- C: Center line
- L: Center Axis
- d: Distance
- D: Diameter
- W: Contact line
- X: Direction
- Y: Direction
- Z: Direction

## Claims

1. Rear suspension system (1) for a rear wheel of a vehicle (45), in particular an automotive vehicle, wherein the suspension system (1) comprises a plurality of lower links (7, 7', 9),
**characterized in that**:
a chassis-side hard point (19) of at least one rear lower link (7, 7'), in particular a rear lower leading link (7, 7'), among the plurality of lower links (7, 7', 9) is located rearwards from a center axis (A) of the rear wheel by a greater distance than a distance between a chassis-side hard point (21) of any other lower link (9), in particular including at least one front lower link, among the plurality of lower links (7, 7', 9) and the center axis (A) of the rear wheel.

2. The suspension system according to claim 1, wherein the suspension system (1) is a five-link suspension system and/or comprises a transverse lower link (9), a rear upper link (11), a front upper arm (13, 13') or links and/or a track rod (15).

3. The suspension system according to any one of the preceding claims, wherein the chassis-side hard points (19, 21, 23) of the leading lower link (7, 7'), of the rear upper link (11) and/or of the transverse lower link (9) is or are arranged, respectively, at or behind the wheel center with respect to a specific direction (X), especially when the suspension system (1) is installed on the vehicle (45),
wherein the specific direction (X) points from the front to the rear of the vehicle (45) parallel to the vehicle's center axis, especially for the suspension system (1) being installed on the vehicle (45).

4. The suspension system according to any one of claims 2 to 3, wherein the chassis-side hard points (25, 27) of the front upper arm (13, 13') or links and/or of the track rod (15) is or are, respectively, before the wheel center with respect to the specific direction (X).

5. The suspension system according to any one of the preceding claims, wherein each of one or more of the links (7, 7', 9, 11, 13, 13', 15) has a bushing (17) at one of its ends for coupling the link (7, 7', 9, 11, 13, 13', 15) to a chassis of the vehicle (45), wherein preferably the bushing (17) provides the respective chassis-side hard points (19, 21, 23, 25, 27).

6. The suspension system according to any one of the preceding claims, wherein the suspension system (1) is designed such, especially the leading lower link (7, 7') and the transverse lower link (9) are arranged such, that for the suspension system (1) a separation of longitudinal compliance for comfort and side stiffness for roadholding and/or handling is obtained.

7. The suspension system according to claim 6, wherein the transverse lower link (9) comprises a stiff and pivoting bushing (17), especially for setting a roadholding response and/or a side stiffness.

8. The suspension system according to any one of the claims 6 to 7, wherein the leading lower link (7, 7') comprises a large and/or soft bushing (17), especially aimed at setting a longitudinal impact comfort, especially thanks to a longitudinal compliance up to 20 mm at the wheel.

9. The suspension system according to any one of the preceding claims, wherein the suspension system (1) comprises a spring (39), which preferably (a) is located and/or extends behind the wheel center with respect to the specific direction (X) and/or (b) has a center axis (L), wherein at least that section of the spring's center axis (L) which extends within the spring (39) has a minimal distance (d) from a vertical extending diameter-line (D) of the wheel mid plane, especially so as to create a motion ratio of the spring deflection compared to wheel vertical motion of more than 0.6, and ideally more than 0.70.

10. The suspension system according to any one of the preceding claims, wherein the suspension system (1) comprises a damper (41), which preferably (a) is located and/or extends in front of the wheel center with respect to the specific direction (X) and/or (b) is mounted with its bottom on the knuckle (43).

11. The suspension system according to any one of the preceding claims, wherein the track rod (15) is located and/or extends in front of the wheel center with respect to the specific direction (X).

12. The suspension system according to any one of the preceding claims, wherein a kinematic point (29) of the leading lower link (7, 7') and/or a kinematic point (31) of the transverse lower link (9) is or are located behind the wheel center with respect to the specific direction (X).

13. The suspension system according to any one of the preceding claims, wherein a kinematic point (33) of the rear upper link (11) and/or a kinematic point (35) of the front upper arm (13, 13') or links is or are located in front of the wheel center with respect to the specific direction (X).

14. The suspension system according to any one of the preceding claims, wherein a kinematic point (37) of the track rod (15) is arranged at a side front of the knuckle (43).

15. Vehicle (45), especially an electric vehicle or a hybrid vehicle, having at least one suspension system (1) according to any one of the preceding claims, wherein preferably the vehicle comprises a rear subframe which is hard-mounted to a vehicle chassis.

## Patentansprüche

1. Hinterradaufhängungssystem (1) für ein Hinterrad eines Fahrzeugs (45), insbesondere eines Kraftfahrzeugs, wobei das Aufhängungssystem (1) eine Vielzahl von Unterlenkern (7, 7', 9) umfasst, **dadurch gekennzeichnet, dass**:
ein chassisseitiger Hartpunkt (19) mindestens eines hinteren Unterlenkers (7, 7'), insbesondere eines führenden hinteren Unterlenkers (7, 7'), aus der Vielzahl von Unterlenkern (7, 7', 9) von einer Mittelachse (A) des Hinterrads um einen größeren Abstand nach hinten angeordnet ist als ein Abstand zwischen einem chassisseitigen Hartpunkt (21) eines beliebigen anderen Unterlenkers (9), insbesondere einschließlich mindestens eines vorderen Unterlenkers, aus der Vielzahl von Unterlenkern (7, 7', 9) und der Mittelachse (A) des Hinterrads.

2. Aufhängungssystem nach Anspruch 1, wobei das Aufhängungssystem (1) ein Fünflenkeraufhängungssystem ist und/oder einen Querunterlenker (9), einen hinteren Oberlenker (11), einen vorderen oberen Arm (13, 13') oder Lenker und/oder eine Spurstange (15) umfasst.

3. Aufhängungssystem nach einem der vorhergehenden Ansprüche, wobei die chassisseitigen Hartpunkte (19, 21, 23) des führenden Unterlenkers (7, 7'), des hinteren Oberlenkers (11) und/oder des Querunterlenkers (9) bezüglich einer bestimmten Richtung (X) jeweils an oder hinter der Radmitte angeordnet ist oder sind, insbesondere wenn das Aufhängungssystem (1) am Fahrzeug (45) montiert ist,
wobei die spezifische Richtung (X) von vorne nach hinten des Fahrzeugs (45) parallel zur Mittelachse des Fahrzeugs zeigt, insbesondere für das Aufhängungssystem (1), das an dem Fahrzeug (45) installiert ist.

4. Aufhängungssystem nach einem der Ansprüche 2 bis 3, wobei die chassisseitigen Hartpunkte (25, 27) des vorderen Oberarms (13, 13') oder Lenkers und/oder der Spurstange (15) bezüglich der spezifischen Richtung (X) jeweils vor der Radmitte liegt oder liegen.

5. Aufhängungssystem nach einem der vorhergehenden Ansprüche, wobei jeder von einem oder mehreren der Lenker (7, 7', 9, 11, 13, 13', 15) an einem seiner Enden eine Buchse (17) zur Ankopplung des Lenkers (7, 7', 9, 11, 13, 13', 15) mit einem Chassis des Fahrzeugs (45) aufweist, wobei vorzugsweise die Buchse (17) die jeweiligen chassisseitigen Hartpunkte (19, 21, 23, 25, 27) bereitstellt.

6. Aufhängungssystem nach einem der vorhergehenden Ansprüche, wobei das Aufhängungssystem (1) derart ausgebildet ist, insbesondere der führende Unterlenker (7, 7') und der Querunterlenker (9) derart angeordnet sind, dass sich für das Aufhängungssystem (1) eine Trennung von Längsnachgiebigkeit für Komfort und Seitensteifigkeit für Bodenhaftung und/oder Fahrverhalten ergibt.

7. Aufhängungssystem nach Anspruch 6, wobei der Querunterlenker (9) eine steife und schwenkbare Buchse (17) umfasst, insbesondere zum Einstellen einer Bodenhaftungsreaktion und/oder einer Seitensteifigkeit.

8. Aufhängungssystem nach einem der Ansprüche 6 bis 7, wobei der führende Unterlenker (7, 7') eine große und/oder weiche Buchse (17) umfasst, die insbesondere auf die Einstellung eines Längsaufprallkomforts ausgerichtet ist, insbesondere dank einer Längsnachgiebigkeit von bis zu 20 mm am Rad.

9. Aufhängungssystem nach einem der vorhergehenden Ansprüche, wobei das Aufhängungssystem (1) eine Feder (39) umfasst, die vorzugsweise (a) bezüglich der spezifischen Richtung (X) hinter der Radmitte angeordnet ist und/oder sich erstreckt und/oder (b) eine Mittelachse (L) aufweist, wobei zumindest der Abschnitt der Mittelachse (L) der Feder, der sich innerhalb der Feder (39) erstreckt, einen minimalen Abstand (d) von einer vertikal verlaufenden Durchmesserlinie (D) der Radmittelebene aufweist, insbesondere um ein Bewegungsverhältnis der Einfederung im Vergleich zu einer vertikalen Radbewegung von mehr als 0,6 und idealerweise mehr als 0,70 zu erzeugen.

10. Aufhängungssystem nach einem der vorhergehenden Ansprüche, wobei das Aufhängungssystem (1) einen Dämpfer (41) umfasst, der vorzugsweise (a) bezüglich der spezifischen Richtung (X) vor der Radmitte liegt und/oder sich vor dieser erstreckt und/oder (b) mit seiner Unterseite an dem Achsschenkel (43) montiert ist.

11. Aufhängungssystem nach einem der vorhergehenden Ansprüche, wobei die Spurstange (15) in Bezug auf die spezifische Richtung (X) vor der Radmitte liegt und/oder sich vor dieser erstreckt.

12. Aufhängungssystem nach einem der vorhergehenden Ansprüche, wobei ein kinematischer Punkt (29) des führenden Unterlenkers (7, 7') und/oder ein kinematischer Punkt (31) des Querunterlenkers (9) bezüglich der spezifischen Richtung (X) hinter der Radmitte liegt oder liegen.

13. Aufhängungssystem nach einem der vorhergehenden Ansprüche, wobei ein kinematischer Punkt (33) des hinteren Oberlenkers (11) und/oder ein kinematischer Punkt (35) des vorderen oberen Arms (13, 13') oder Lenker in Bezug auf die spezifische Richtung (X) vor der Radmitte liegt oder liegen.

14. Aufhängungssystem nach einem der vorhergehenden Ansprüche, wobei ein kinematischer Punkt (37) der Spurstange (15) an einer Seitenfront des Achsschenkels (43) angeordnet ist.

15. Fahrzeug (45), insbesondere Elektrofahrzeug oder Hybridfahrzeug, mit zumindest einem Aufhängungssystem (1) nach einem der vorhergehenden Ansprüche, wobei vorzugsweise das Fahrzeug einen hinteren Hilfsrahmen umfasst, der an einem Fahrzeugchassis fest montiert ist.

## Revendications

1. Système de suspension arrière (1) pour une roue arrière d'un véhicule (45), en particulier un véhicule automobile, dans lequel le système de suspension (1) comprend une pluralité de liaisons inférieures (7, 7', 9), **caractérisé en ce que** :
un point dur côté châssis (19) d'au moins une liaison inférieure arrière (7, 7'), en particulier une liaison inférieure arrière de tête (7, 7'), parmi la pluralité de liaisons inférieures (7, 7', 9) est située vers l'arrière par rapport à un axe central (A) de la roue arrière à une distance supérieure à une distance entre un point dur côté châssis (21) de n'importe quelle autre liaison inférieure (9), en particulier incluant au moins une liaison inférieure avant, parmi la pluralité de liaisons inférieures (7, 7', 9) et l'axe central (A) de la roue arrière.

2. Système de suspension selon la revendication 1, dans lequel le système de suspension (1) est un système de suspension à cinq liaisons et/ou comprend une liaison inférieure transversale (9), une liaison supérieure arrière (11), un bras supérieur avant (13, 13') ou des liaisons et/ou une barre d'accouplement (15).

3. Système de suspension selon l'une quelconque des revendications précédentes, dans lequel les points durs côté châssis (19, 21, 23) de la liaison inférieure de tête (7, 7'), de la liaison supérieure arrière (11) et/ou de la liaison inférieure transversale (9) est ou sont disposés, respectivement, au centre ou derrière le centre de la roue par rapport à une direction spécifique (X), en particulier lorsque le système de suspension (1) est installé sur le véhicule (45),
dans lequel la direction spécifique (X) pointe de l'avant vers l'arrière du véhicule (45) parallèlement à l'axe central du véhicule, en particulier pour le système de suspension (1) installé sur le véhicule (45).

4. Système de suspension selon l'une quelconque des revendications 2 à 3, dans lequel les points durs côté châssis (25, 27) du bras supérieur avant (13, 13') ou des liaisons et/ou de la barre d'accouplement (15) est ou sont, respectivement, avant le centre de la roue par rapport à la direction spécifique (X).

5. Système de suspension selon l'une quelconque des revendications précédentes, dans lequel chacune des une ou plusieurs des liaisons (7, 7', 9, 11, 13, 13', 15) comporte une bague (17) à l'une de ses extrémités pour coupler la liaison (7, 7', 9, 11, 13, 13', 15) à un châssis du véhicule (45), dans lequel la bague (17) fournit de préférence les points durs côté châssis (19, 21, 23, 25, 27) respectifs.

6. Système de suspension selon l'une quelconque des revendications précédentes, dans lequel le système de suspension (1) est conçu de telle sorte, en particulier la liaison inférieure de tête (7, 7') et la liaison inférieure transversale (9) sont disposés de telle sorte, que, pour le système de suspension (1), une séparation de conformité longitudinale soit obtenue pour le confort et la rigidité latérale pour la tenue de route et/ou la maniabilité.

7. Système de suspension selon la revendication 6, dans lequel la liaison inférieure transversale (9) comprend une bague rigide et pivotante (17), notamment pour définir une réponse de tenue de route et/ou une rigidité latérale.

8. Système de suspension selon l'une quelconque des revendications 6 à 7, dans lequel la liaison inférieure de tête (7, 7') comprend une bague (17) large et/ou souple, visant en particulier à établir un confort d'impact longitudinal, notamment grâce à une conformité longitudinale allant jusqu'à 20 mm au niveau de la roue.

9. Système de suspension selon l'une quelconque des revendications précédentes, dans lequel le système de suspension (1) comprend un ressort (39), qui de préférence (a) est situé et/ou s'étend derrière le centre de la roue par rapport à la direction spécifique (X) et/ou (b) a un axe central (L), dans lequel au moins la section de l'axe central du ressort(L) qui s'étend à l'intérieur du ressort (39) présente une distance minimale (d) par rapport à une ligne de diamètre d'extension verticale (D) du plan médian de la roue, notamment de manière à créer un rapport de mouvement de la déflexion du ressort par rapport au mouvement vertical de la roue de plus de 0,6, et idéalement de plus de 0,70.

10. Système de suspension selon l'une quelconque des revendications précédentes, dans lequel le système de suspension (1) comprend un amortisseur (41), qui de préférence (a) est situé et/ou s'étend devant le centre de la roue par rapport à la direction spécifique (X) et/ou (b) est monté avec sa partie inférieure sur l'articulation (43).

11. Système de suspension selon l'une quelconque des revendications précédentes, dans lequel la barre d'accouplement (15) est située et/ou s'étend devant le centre de la roue par rapport à la direction spécifique (X).

12. Système de suspension selon l'une quelconque des revendications précédentes, dans lequel un point cinématique (29) de la liaison inférieure de tête (7, 7') et/ou un point cinématique (31) de la liaison inférieure transversale (9) est ou sont situés derrière le centre de la roue par rapport à la direction spécifique (X).

13. Système de suspension selon l'une quelconque des revendications précédentes, dans lequel un point cinématique (33) de la liaison supérieure arrière (11) et/ou un point cinématique (35) du bras supérieur avant (13, 13') ou de liaisons est ou sont situés devant le centre de la roue par rapport à la direction spécifique (X).

14. Système de suspension selon l'une quelconque des revendications précédentes, dans lequel un point cinématique (37) de la barre d'accouplement (15) est disposé sur un côté avant de l'articulation (43).

15. Véhicule (45), particulièrement un véhicule électrique ou un véhicule hybride, comportant au moins un système de suspension (1) selon l'une quelconque des revendications précédentes, dans lequel, de préférence, le véhicule comporte un faux-châssis arrière monté en dur sur un châssis du véhicule.
